Europäisches Patentamt

(19) European Patent Office

Office européen des brevets

(11) Veröffentlichungsnummer: **0 107 768**
**B1**

# (12) EUROPÄISCHE PATENTSCHRIFT

(45) Veröffentlichungstag der Patentschrift:
**20.11.86**

(51) Int. Cl.⁴: **C 04 B 38/06**

(21) Anmeldenummer: **83108804.2**

(22) Anmeldetag: **07.09.83**

(54) **Porosiertes, insbesondere feuerfestes keramisches Erzeugnis sowie Verfahren zu seiner Herstellung.**

(30) Priorität: **21.10.82 DE 3239033**

(43) Veröffentlichungstag der Anmeldung:
**09.05.84 Patentblatt 84/19**

(45) Bekanntmachung des Hinweises auf die Patenterteilung:
**20.11.86 Patentblatt 86/47**

(84) Benannte Vertragsstaaten:
**AT BE DE FR GB IT LU NL**

(56) Entgegenhaltungen:
**AU - B - 2 069**
**DE - A - 3 046 791**
**FR - A - 1 484 561**
**GB - A - 790 636**
**US - A - 3 310 614**

**CHEMICAL ABSTRACTS, Band 95, Nr. 8, August 1981,**
**Seite 289, Nr. 66642d, Columbus, Ohio, USA**

(73) Patentinhaber: **Dr. C. Otto Feuerfest GmbH,**
**Dr.-C.-Otto-Strasse 222, D-4630 Bochum 5 (DE)**

(72) Erfinder: **Ehlert, Walter, Dr., Dipl.-Ing., Kassenberger**
**Strasse 26, D-4630 Bochum 5 (DE)**
Erfinder: **Dietzel, Klaus-Jürgen, Hosterbacher**
**Strasse 118, D-5300 Bonn 3 (DE)**
Erfinder: **Reuter, Karl-Heinz, Auf dem Holte 6,**
**D-4630 Bochum 5 (DE)**

(74) Vertreter: **Solf, Alexander, Dr. et al, Patentanwälte Dr.**
**Solf & Zapf Postfach 13 02 19, D-5600 Wuppertal 1 (DE)**

## Beschreibung

Die Erfindung bezieht sich auf ein keramisches, insbesondere feuerfestes Erzeugnis, gemäss Oberbegriff des Anspruchs 1 sowie auf ein Verfahren zur Herstellung des keramischen Erzeugnisses.

Keramische Erzeugnisse weisen in der Regel eine Porosität auf, die aus der Rohstoffzusammensetzung, dem Kornaufbau des Rohstoffes und dem Austreiben von Wasser während des Trocknens und Brennens entsteht. Diese «natürliche» Porosität reicht für Anwendungsfälle nicht aus, bei denen es darauf ankommt, neben der Feuerfestigkeit auch eine gute Wärmedämmung zu gewährleisten. Für diese Zwecke werden die keramischen Erzeugnisse mit zusätzlichen Poren ausgestattet. Diese Porosierung kann mit sogenannten «Ausbrennstoffen» erzeugt werden. Es handelt sich um brennbare, ausschmelzende, verdampfende oder vergasende Zusatzstoffe in Teilchenform oder dgl., die in die keramische Masse eingemischt werden und ein vorbestimmtes Volumen einnehmen. Bei Temperaturerhöhung entweichen diese Stoffe in dampfförmigem, gasförmigem oder flüssigem Zustand aus der Masse gegebenenfalls rückstandslos, wobei der von den Teilchen vorher eingenommene Raum als Porenraum zurückbleibt, woraus die Porosierung, d.h. die zusätzliche Porosität neben der «natürlichen» Porosität resultiert. Ausser diesen meist organischen «Ausbrennstoffen» wie Sägemehl, Korkmehl, Styropor, Naphthalin oder dgl. sind anorganische, poröse Zusatzstoffe wie Perlit, Schaumglas, Vermikulit, Blähtongranulate, Kieselgur oder dgl. als Zusatzstoffe bekannt, die während des keramischen Brandes ihre Eigenporosität durch Schmelzen verlieren können, wobei ggf. eine Reaktion mit dem Matrixmaterial stattfindet und ein Hohlraum bzw. eine Pore gebildet wird an der Stelle, an der sich das Zusatzstoffkorn vorher befand. Eine weitere Möglichkeit zur Porosierung keramischer Erzeugnisse besteht in der Verwendung von schäumenden und/oder blähenden Chemikalien, die eine Kugelporosität vor oder während des keramischen Brandes erzeugen.

Die meisten Zusatzstoffe weisen mehr oder weniger kubische Kornformen auf. Eine Ausnahme bilden Sägemehl und Faserstoffe. Da die Zusatzstoffe im Vergleich zu den anderen keramischen Rohstoffen, mit denen sie vermengt werden, sehr leicht sind, sind in aller Regel besondere Vorkehrungen zu treffen, um ein effektives Mischen zu gewährleisten, d.h. eine Dispersität der Zusatzstoffe in der keramischen Rohmasse zu erreichen, die zu einer homogenen Porenverteilung im gebrannten Erzeugnis führt. Meistens gelingt die homogene Verteilung deshalb nicht, weil die Zusatzstoffe mit einem breiten Kornband vorliegen und die kleineren Teilchen sich beim Mischen anders verhalten als die groben Teilchen. Selbst aber bei Verwendung eines Zusatzstoffes mit einem engen Kornband sind homogene Verteilungen kaum realisierbar. Unter der inhomogenen Verteilung des Zusatzstoffes leidet die Qualität des gebrannten Erzeugnisses, und zwar nicht nur die Festigkeit, sondern auch insbesondere die Wärmeleitfähigkeit.

Die US-A-3 310 614 beschreibt ein keramisches Erzeugnis gemäss Oberbegriff des Anspruchs 1. Zu seiner Herstellung wird ein flacher, körniger Ausbrennstoff, zum Beispiel Schalen, Sonnenblumenkerne, verwendet, der der keramischen Rohmasse zugemischt wird. Dies ist jedoch sehr schwierig und keinesfalls so durchführbar, dass die Schalen homogen und statistisch verteilt in der Rohmasse angeordnet sind. Die Schalen werden daher durch den Formgebungsprozess nach Art einer Fluid-Textur ausgerichtet angeordnet, so dass insoweit eine definierte Lage und Verteilung der Schalen bewirkt werden kann. Nur aufgrund der Ausrichtung können die Schalen als Ausbrennstoffe verwendet werden. Sonnenblumenschalen können des weiteren nicht rückstandsfrei entfernt werden. Es bleiben verascht Rückstände in den Poren zurück.

Aufgabe der Erfindung ist, bei keramischen, insbesondere feuerfesten Erzeugnissen, wie insbesondere feuerfesten Steinen und Leichtmassen, eine bessere Wärmedämmung bei zumindest gleicher Festigkeit zu gewährleisten.

Diese Aufgabe ist erfindungsgemäss bei einem keramischen Erzeugnis mit den Merkmalen des Anspruchs 1 gelöst. Durch die Erfindung ist ferner gemäss Anspruch 5 ein Verfahren zur Herstellung eines solchen keramischen Erzeugnisses geschaffen worden. Vorteilhafte Weiterbildungen der Erfindung sind in den Unteransprüchen angegeben.

Die Plättchen- oder Schuppenporen sind sehr dünn bzw. flach ausgebildet und weisen eine geringe Dicke im Vergleich zu ihren Längserstreckungen auf. Sie werden in der Regel von im wesentlichen ebenen, parallel zueinander liegenden Ober- und Unterflächen begrenzt, wobei die Seitenkanten und Seitenbegrenzungen unregelmässig und vielkantig sein können.

Die Plättchen- bzw. Schuppenporen sind erfindungsgemäss homogen in der Matrix des Erzeugnisses verteilt, wobei sie in ihrer räumlichen Lage vorzugsweise unregelmässig bzw. statistisch verteilt sind. Ihre Abmessungen bilden zweckmässigerweise ein Maximum der Porenverteilung, das deutlich unterscheidbar ist von einem Maximum der Verteilung der Poren, die die Matrix des Erzeugnisses durchsetzen. Unter dem Begriff «Matrix» soll im Rahmen der Erfindung das die grossen Poren umgebende Material verstanden werden, das mit deutlich kleineren Poren durchsetzt ist, die ein zweites Maximum der Porenverteilung bilden. Das erfindungsgemässe Produkt weist mindestens zwei deutliche Maxima der Porenverteilungen auf. Bekannte Produkte, deren Poren auf der Basis von gemahlenem, körnigem Naphthalin hergestellt worden sind, haben dagegen keine derart ausgeprägte Porenverteilung mit sehr engen Maxima.

Es ist überraschend, dass die plättchen- bzw. schuppenartige Porenform zu überlegenen Eigenschaften führt. Bisher ist man davon ausge-

Schuppen in Einzelkristalle bzw. Einzelkristallgruppen erfolgt, woraus bei deren Verwendung ein Produkt erzeugt werden kann, das sehr kleine Poren aufweist, deren Maximum der Verteilung sehr eng ist und wobei keine andere künstlich erzeugte Porengruppe (Maximum der Porenverteilung) vorhanden ist.

Die zerkleinerten Naphthalinschuppen und Einzelkristalle bzw. Einzelkristallgruppen können ohne weiteres, wie üblich, der keramischen Masse zugesetzt werden, wobei eine relativ gute Dispersität erzielbar ist. Die gute Dispersität bzw. homogene Verteilung der Schuppen sowie deren unregelmässige Anordnung bzw. Lagerung in der Masse führt nach üblichem Austreiben des Naphthalins zu einer Schuppenporenstruktur mit Poren, deren Lage und Abmessungen denen der Naphthalinschuppen in der Rohmasse entsprechen. Eine besonders homogene Schuppenstruktur mit vielen kleinen Poren mit einem engen Maximum der Porenverteilung wird jedoch erzielt, wenn man, wie oben bereits beschrieben, den Zerkleinerungsvorgang während des Mischens des Zusatzstoffes mit der keramischen Masse durchführt und dabei hohe Scherkräfte aufwendet.

Das folgende Beispiel verdeutlicht die Erfindung:

Es wird eine keramische Masse aus folgenden Bestandteilen hergestellt:
20 Gew.-% feuerfester Ton 1
10 Gew.-% feuerfester Ton 2
5 Gew.-% Leichtschamottemehl (Körnung 0 bis 1 mm)
65 Gew.-% Naphthalinschuppen (Schuppendicke etwa 0,5 mm, längste Erstreckung etwa 8 mm).

Die Bestandteile werden etwa fünf Minuten in einem Zwangsmischer mit Wirbler trockengemischt. Danach wird 16 Gew.-% Wasser, bezogen auf die Trockenmasse, zugesetzt und etwa zehn Minuten weitergemischt. Die daraus resultierende keramische Masse wird zu Steinen geformt, getrocknet, vom Naphthalin befreit und bei etwa 1400 °C keramisch gebrannt. Der gebrannte, feuerfeste Leichtstein weist die folgenden Eigenschaften auf:
Rohdichte: 0,56 Gramm pro ccm
Kaltdruckfestigkeit: 7,0 N/mm$^2$
Wärmeleitfähigkeit bei 1200 °C: 0,43 W/mK
Porenverteilung der Poren zwischen 0 und 100 µm: 60% im Bereich zwischen 2 und 6 µm.

Zum Vergleich wird eine Masse aus den gleichen Bestandteilen hergestellt. Anstelle des geschuppten Naphthalins wird üblicherweise verwendetes, körniges Naphthalin mit einem Kornband zwischen 0 und 2,5 mm verwendet (ein feineres, zerkleinertes, trockenes Material steht wegen der schwierigen Mahlbarkeit für technische Zwecke nicht zur Verfügung). Die Bestandteile werden in einem Mischkollergang zur keramischen Masse aufbereitet und die Masse, wie vorstehend beschrieben, zu Steinen verarbeitet. Die gebrannten Steine weisen die folgenden Eigenschaften auf:
Rohdichte: 0,56 Gramm pro ccm
Kaltdruckfestigkeit: 6, 2 N/mm$^2$
Wärmeleitfähigkeit bei 1200 °C: 0,52 W/mK
Porengrössenverteilung der Poren zwischen 0 und 100 µm: 60% im Bereich zwischen 2 bis 20 µm.

Bei einem weiteren Versuch wurde die Vergleichsmasse mit einem Zwangsmischer mit Wirbler bearbeitet. Die Verwendung des Zwangsmischers mit Wirbler brachte keine nennenswerte Verbesserung der Eigenschaften des Vergleichsprodukts.

Das Beispiel verdeutlicht, dass die Verwendung von schuppenförmigem Naphthalin zu einem Produkt führt, das deutlich bessere Eigenschaften aufweist als die herkömmlichen Produkte.

Die nach dem erfindungsgemässen Verfahren hergestellten Erzeugnisse weisen insbesondere im hohen Temperaturbereich (1000 bis 1200 °C) eine sehr niedrige Wärmeleitfähigkeit auf und gewährleisten dadurch eine bessere Wärmedämmung als Erzeugnisse, die mit herkömmlichem Naphthalinzusatz hergestellt worden sind. Dies beruht sicherlich auf einer gleichmässigeren Porenverteilung und möglicherweise auf einer aufgrund der flachen Porenform stärker behinderten Konvektion in den Poren.

Anhand der Zeichnung und eines Ausführungsbeispiels wird die Struktur des erfindungsgemässen keramischen Erzeugnisses verdeutlicht. Die Abbildungen zeigen einen feuerfesten Leichtstein, der nach dem oben beschriebenen Beispiel hergestellt worden ist. Dabei verdeutlichen:
Fig. 1 die vergrösserte Struktur des Leichtsteins im Massstab 1:2,
Fig. 2 die vergrösserte Struktur im Massstab 1:20,
Fig. 3 eine Schuppenpore in der Matrix im Massstab 1:80.

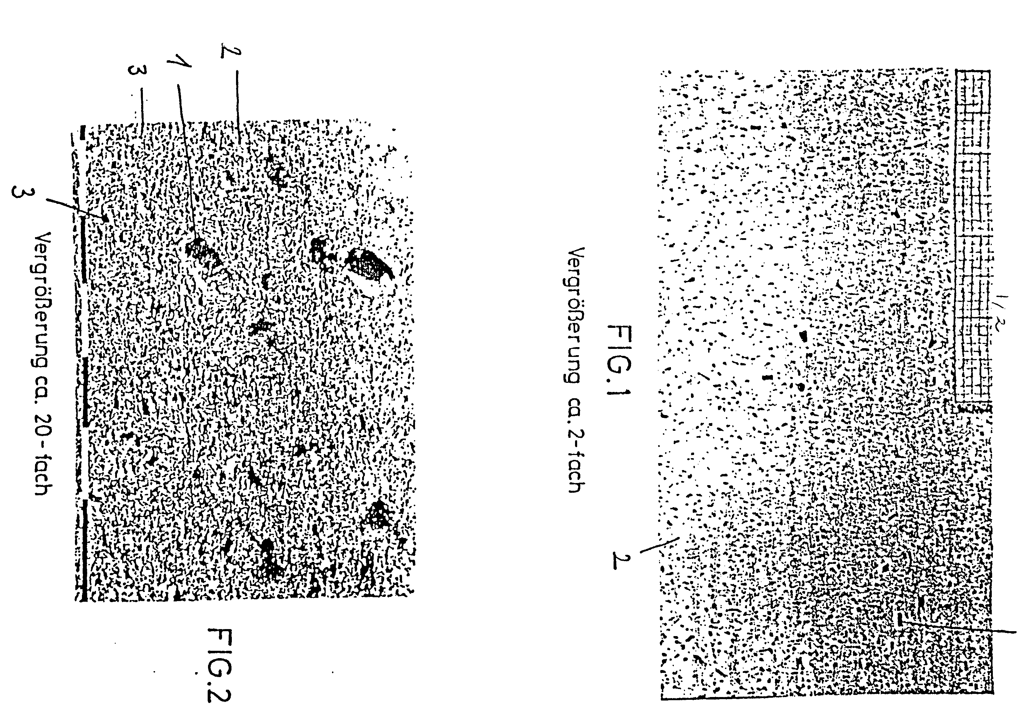

Das erfindungsgemässe keramische Erzeugnis weist schuppenförmige Poren 1 auf, die im Matrixmaterial 2 homogen und statistisch verteilt sind (Fig. 1). Die Form der schuppenförmigen Poren resultiert aus zerkleinerten Naphthalinschuppen. Viele schuppenförmige Poren können etwa quaderförmig ausgebildet sein. Die schuppenförmigen Poren 1 bilden eine Porengruppe mit einem engen Maximum der Porenverteilung.

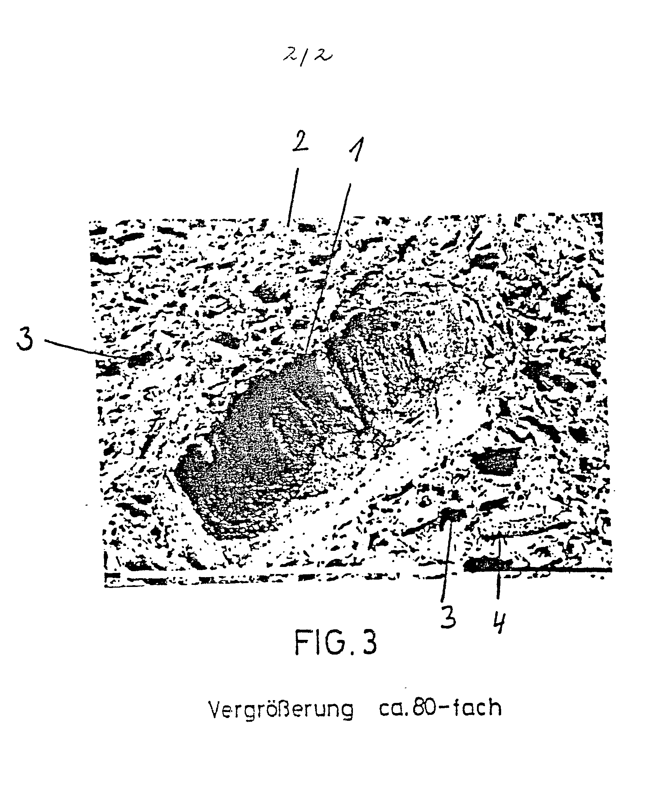

Das Matrixmaterial 2 ist mit Poren 3 durchsetzt, die ebenfalls homogen und statistisch verteilt sind (Fig. 2 und 3). Die Poren 3 resultieren aus dem Feinkornanteil des zerkleinerten Schuppennaphthalins bzw. der Form der Einkristalle oder Einkristallgruppen. Die Gruppe der Poren 3 weist im Vergleich zur Gruppe der Poren 1 deutlich kleinere Abmessungen auf. Sie bildet ein weiteres enges Maximum der Porenverteilung.

Neben den durch das Verdrängen von Naphthalin entstandenen Poren 1 und 3 sind im Matrixmaterial 2, das den Festkörper bildet und aus gebranntem keramischen Material besteht, Mikroporen 4 in den Wandungen des Matrixmaterials 2 vorhanden, wobei die Wandungen die Po-

gangen, dass die Kugelpore sowohl bezüglich der Festigkeit als auch der Wärmedämmung die besten Eigenschaften des keramischen Erzeugnisses gewährleisten würde. Woraus bei der erfindungsgemässen Porenform die verbesserten Eigenschaften resultieren, ist noch nicht bekannt.

Plättchen- bzw. schuppenartige Poren zu erzeugen, lag keineswegs nahe, weil bekanntlich plättchen- und schuppenförmige Zusatzstoffe noch grössere Probleme beim homogenen Verteilen der Teilchen schaffen als runde oder mehr oder weniger kubischer Körner. Plättchen und Schuppen neigen wegen ihrer flachen Dimensionen in verstärktem Masse zur Agglomeration und zur schichtförmig gerichteten inhomogenen Verteilung in der Masse.

In überraschender Weise treten die Probleme bei der Verwendung von schuppenförmigem Naphthalin insbesondere dann nicht auf, wenn Plättchen des Zusatzstoffes mit grösseren Abmessungen eingesetzt werden, die während des Mischens eine Zerkleinerung zu Plättchen kleinerer Abmessungen erfahren. Die Verwendung von grobkörnigen Zusatzstoffen ist in der Regel widersinnig, wenn man Poren erzeugen will, die kleiner sind als das Grobkorn.

Bevorzugt wird als Zusatzstoff plättchenförmiges Naphthalin verwendet. Ein derartiges Produkt ist im Handel erhältlich, jedoch bisher aus den oben genannten Gründen nicht zur Herstellung von keramischen Erzeugnissen wie feuerfesten Leichtsteinen oder Leichtmassen benutzt worden, obwohl seit langem bekannt ist, poröse keramische, feuerfeste Leichterzeugnisse durch Zumischen von Naphthalin in wasserhaltige Rohmassen herzustellen. Das kristalline Naphthalin wird in Mahl- und Siebanlagen auf eine Korngrösse von 0 bis etwa 4 mm gemahlen und in Abhängigkeit von der gewünschten Porosität der wasserhaltigen keramischen Rohmasse zugesetzt. Nach der Formgebung und Trocknung wird das Naphthalin unter Einwirkung von Wärme aus dem keramischen Halbfertig-Erzeugnis ausgeschmolzen und/oder ausgedampft, wobei das Naphthalin im keramischen Erzeugnis Poren hinterlässt, deren Spektrum dem Kornspektrum des Mahlgutes entspricht. Das gasförmige und flüssige Naphthalin, der während des Mischens Scherkräfte zum Zerbrechen der Plättchen und/oder Schuppen entwickelt.

7. Verfahren nach Anspruch 5 und/oder 6, dadurch gekennzeichnet, dass Naphthalin in Mengen von 30 bis 80 Gew.-%, bezogen auf die Trokkenmasse, zugemischt wird.

8. Verfahren nach einem oder mehreren der Ansprüche 5 bis 7, dadurch gekennzeichnet, dass Naphthalinplättchen und/oder -schuppen mit einer Dicke von 0,4 bis 0,8 mm und einer Längserstreckung bis etwa 10 mm zugemischt werden.

## Revendications

1. Produit céramique, en particulier réfractaire, avec une matrice céramique présentant éventuellement des micropores engendrés par exemple par l'eau et dans laquelle sont dispersés des pores

thalins erfolgt während des Mischens, wozu keinerlei besondere Vorkehrungen gegenüber üblichen Mischvorgängen gewählt werden müssen. Zweckmässig ist jedoch ein Mischaggregat zu verwenden, das einen Wirbler aufweist und hohe Scherkräfte auf das Mischgut ausübt. Ein solches Aggregat bewirkt in überraschender Weise eine Zerkleinerung mit einem sehr engen Kornband im Teilchenbereich unter 20 μm und eine homogene Verteilung auch des Feinkornanteils des Zusatzstoffes in der keramischen Rohmasse. Dabei ist überraschend, dass ein Kornband mit einem engen Kornspektrum im Feinkornbereich geschaffen wird, wobei eine im wesentlichen plättchen- bzw. schuppenartige Kornform erhalten bleibt.

Das im Handel erhältliche Naphthalin in Schuppenform wird z.B. hergestellt, indem eine rotierende, von innen gekühlte Walze in ein Bad aus flüssigem Naphthalin eingetaucht wird. Dabei bildet sich auf der Walzenoberfläche eine feste Naphthalinschicht, die aus Naphthalinkristallen besteht, die miteinander verwachsen bzw. verklebt sind. Durch Abstreifen der Schicht von der Walze entstehen Schuppen, die aus vielen einzelnen Kristallen aufgebaut sind. Durch das Zerkleinern wird offenbar ein Zerbrechen in kleinere Schuppen und Einzelkristalle oder Einzelkristallgruppen erzielt, wobei jede Einzelkristallgruppe aus wenigen mehreren Einzelkristallen besteht. Dabei wird bei der erfindungsgemässen Verwendung aus kleineren Schuppen das eine Maximum der Porenverteilung und aus den Einzelkristallen bzw. Einzelkristallgruppen das andere Maximum gebildet. Diese vorteilhafte Verteilung der Poren, die insbesondere aus der erfindungsgemässen Anwendung hoher Scherkräfte beim Zerkleinern der Schuppen und insbesondere aus der gemeinsamen Behandlung mit den anderen Rohstoffen der keramischen Masse dabei resultiert, war nicht vorhersehbar. Eine derartige Zerkleinerung ist mit körnigem Naphthalin nicht erreichbar, weshalb die bekannten Produkte auch nicht die mit der Erfindung erzielbaren Vorteile aufweisen können.

Die Abmessungen der im Handel erhältlichen Naphthalinschuppen betragen:
Dicke: 0,03 bis 2,0 mm
längste Erstreckung bis etwa 25 mm
ceramic matrix material, which can have micropores e.g. arising from water, and which is permeated by flat pores generated using a material removed by firing, characterised by platelet- and/or flake-shaped pores (1) which are free of residues of the material removed by firing and arranged homogeneously as well as statistically distributed in the matrix material (2).

2. Ceramic product according to Claim 1, characterised in that the pore size distribution of the pores (1) has a narrow maximum.

3. Ceramic product according to Claim 1 and/or 2, characterised in that the matrix material (2) is additionally permeated by smaller pores (3) which are likewise arranged distributed homogeneously as well as statistically and which are free of residues of the material removed by firing.

4. Ceramic product according to Claim 3, char-acterised in that the pore size distribution of the pores (3) likewise has a narrow maximum.

5. Process for the manufacture of a ceramic product according to one or more of Claims 1 to 4, wherein particulate naphthalene is mixed into the ceramic raw material as a material removed by firing, shaped bodies are then formed from the raw material, the shaped bodies are heated to drive out the naphthalene and thereafter the shaped bodies freed of the naphthalene are fired, characterised in that naphthalene is mixed into the ceramic raw material in the form of platelets and/or flakes and the platelets and/or flakes are broken up during the mixing.

6. Process according to Claim 5, characterised in that in order to break up the platelets and/or flakes, a mixer is used which during the mixing develops shear forces to break up the platelets and/or flakes.

7. Process according to Claim 5 and/or 6, characterised in that naphthalene is mixed in in quantities of 30 to 80% by weight taken on the dry substance.

8. Process according to one or more of Claims 5 to 7, characterised in that naphthalene platelets and/or flakes are mixed in having a thickness of from 0.4 to 0.8 mm and a longitudinal extent up to about 10 mm.

FIG.1

Vergrößerung ca. 2-fach

FIG.2

Vergrößerung ca. 20-fach

0 107 768

2/2

FIG.3

Vergrößerung  ca.80-fach

9